## Europäisches Patentamt
## European Patent Office
## Office européen des brevets

(11) Veröffentlichungsnummer: **0 319 880**
**A1**

(12) **EUROPÄISCHE PATENTANMELDUNG**

(21) Anmeldenummer: **88120232.9**

(22) Anmeldetag: **03.12.88**

(51) Int. Cl.⁴: **B65G 25/10 , B65G 1/08**

(30) Priorität: **11.12.87 CH 4860/87**
**04.07.88 CH 2535/88**

(43) Veröffentlichungstag der Anmeldung:
**14.06.89 Patentblatt 89/24**

(84) Benannte Vertragsstaaten:
**AT BE CH DE ES FR GB GR IT LI LU NL SE**

(71) Anmelder: **Radlmair, Josef**
**Sonnenwiesenstrasse 20**
**CH-8280 Kreuzlingen(CH)**

(72) Erfinder: **Radlmair, Josef**
**Sonnenwiesenstrasse 20**
**CH-8280 Kreuzlingen(CH)**

(74) Vertreter: **Troesch, Hans Alfred, Dr. Ing. et al**
**Walchestrasse 19**
**CH-8035 Zürich(CH)**

(54) **Palettenvorschubanlage.**

(57) Die Palettenvorschub-Anlage ist mit zwei Schienen (3) zur Aufnahme von Rolluntersätzen (81) ausgerüstet, die mit Paletten (82) beladbar sind. Ferner sind schiebebewegliche Vorschubknaggen (12) und ein diese Knaggen (12) antreibbarer Antrieb (8, 11) vorgesehen. Das Entladeende der Anlage weist mindestens einen Endanschlag (60) auf, welcher in eine Freigabelage bewegbar ist. Ferner ist ein Endanschlagbetätiger (67) angeordnet, welcher vom Entladeende her nach dem andern Ende der Anlage hin zum Freigeben des Endanschlages (60) betätigbar ist. Ein Zwischenanschlag (73) ist mit dem Endanschlag (60) wirkverbunden, z.B. mittels eines Betätigers (67) und gegebenenfalls über ein Gestänge. Diese Palettenvorschub-Anlage gestattet einen mühelosen Uebergang von der Palettenvorschub-Anlage auf das Transfergerät.

FIG. 2

EP 0 319 880 A1

## Palettenvorschubanlage

Die vorliegende Erfindung betrifft eine Palettenvorschub-Anlage, insbesondere mi zwei Schienen zur Aufnahme von Rolluntersätzen, die mit Paletten beladbar sind sowie mit schiebebeweglichen Vorschubknaggen und einem diese Knaggen antreibbaren Antrieb.

In der EP-A 0 196 582 ist eine Palettenvorschub-Anlage beschrieben. Deren vorderes oder Entladeende ist mit festen Anschlägen versehen, so dass die von der Palettenvorschub-Anlage auf ein Transfergerät zu verschiebenden Untersätze mit den Paletten, welche tonnenschwer sein können, über diese Anschläge gehoben werden müssen. Dies ist nicht nur mühsam, sondern kann Verschiebung der Ladungen auf den Paletten zur Folge haben sowie entsprechende Schläge beim Absenken der Lasten auf die Transfergeräte. ·

Zum Stande der Technik gehört ferner eine Vorschubeinrichtung einer Vorschubanlage. Diese Vorschubeinrichtung umfasst eine Knagge, die schwenkbar gegen den Druck einer Feder in einem Gehäuse gelagert ist. Dieses Gehäuse sitzt auf einer Gewindespindel, die ihrerseits über ein Getriebe von einem Elektromotor angetrieben wird. Die sich normalerweise in Vorschublage befindende Knagge schiebt den zu bewegenden Gegenstand vor sich hin. Stösst diese nun auf ein Hindernis, beispielsweise einen festen Endanschlag, so bewegt sich trotzdem der Knaggenträger weiter, wobei bei Erreichen eines gewissen Widerstandes, bedingt durch den festen Endanschlag, ein Mechanismus im Knaggenträger ausgelöst wird, welcher den Knaggenträger aus seiner Vorschublage in eine neutrale Lage abschwenkt.

Der nur beispielsweise beschriebene Anschlag bei der Vorschubanlage ist fest, so dass sich bei dieser bekannten Vorschubanlage genau das Problem stellt, welches die vorliegende Erfindung zu lösen trachtet. Eine Lösung dieses Problems ist indessen in dieser Vorveröffentlichung weder angestrebt noch beschrieben. (US-A 3 658 173)

Im weiteren ist eine Transportanlage für zylindrische Körper bekannt geworden, bei welcher eine Vorrichtung vorgesehen ist, um diese zylindrischen Körper quasi im Sprung von einem tieferen auf ein höheres Niveau zu heben. Eine derartige Anlage steht aber mit der vorliegenden Erfindung in keinem Zusammenhang und zeigt auch in Einzelheiten, weder in der Aufgabenstellung noch in der Ausführung, keine Aehnlichkeit mit der vorliegenden Erfindung. (US-A 4 212 584)

Die vorliegende Erfindung bezweckt daher die Schaffung einer Palettenvorschub-Anlage, deren Entladeende diese Nachteile nicht aufweist und einen mühelosen Uebergang von der Palettenvorschub-Anlage auf das Transfergerät ermöglicht.

In Fällen besonders schwerer Lasten soll ein müheloses Eingreifen des Transfergerätes in das Entladeende zur Uebernahme der Untersätze mit den Paletten ermöglicht werden.

In diesem Sinne zeichnet sich die erfindungsgemässe Palettenvorschub-Anlage nach einem der Ansprüche aus.

Die vorliegende Erfindung wird anschliessend beispielsweise anhand einer Figur erläutert.

Es zeigen:

Fig. 1 eine Aufsicht auf das Entladeende einer Palettenvorschub-Anlage,

Fig. 2 einen Schnitt gemäss Schnittlinie II - II der Fig. 1,

Fig. 3 einen Ausschnitt aus dem vordersten Teil des Entladeendes gemäss den Fig. 1 und 2, in vergrösserter Darstellung,

Fig. 4 eine Aufsicht auf ein Entladeende einer Palettenvorschub-Anlage und ein Transfergerät, in einer weiteren Ausführungsform,

Fig. 5 einen Schnitt gemäss der Schnittlinie V - V der Fig. 4,

Fig. 6 schematisch dargestellt die Funktionsweise eines Betätigers gemäss den Fig. 4 und 5 beim Einfahren des Transfergerätes in das Entladeende der Anlage und

Fig. 7 die Funktionsweise desselben Betätigers beim Ausfahren des Transfergerätes.

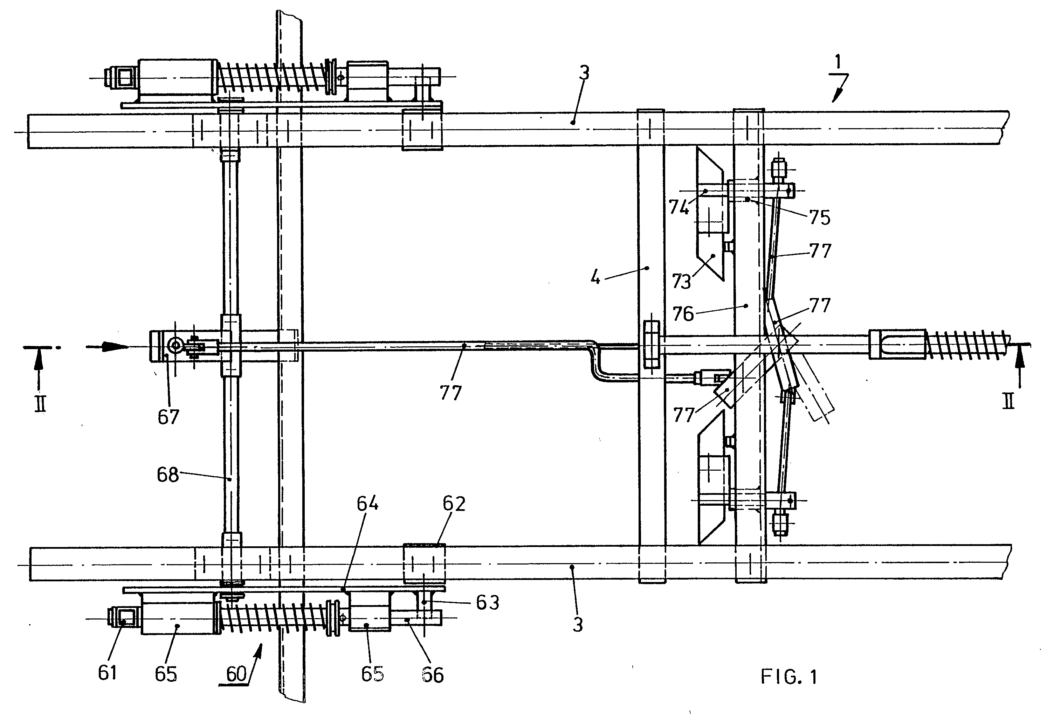

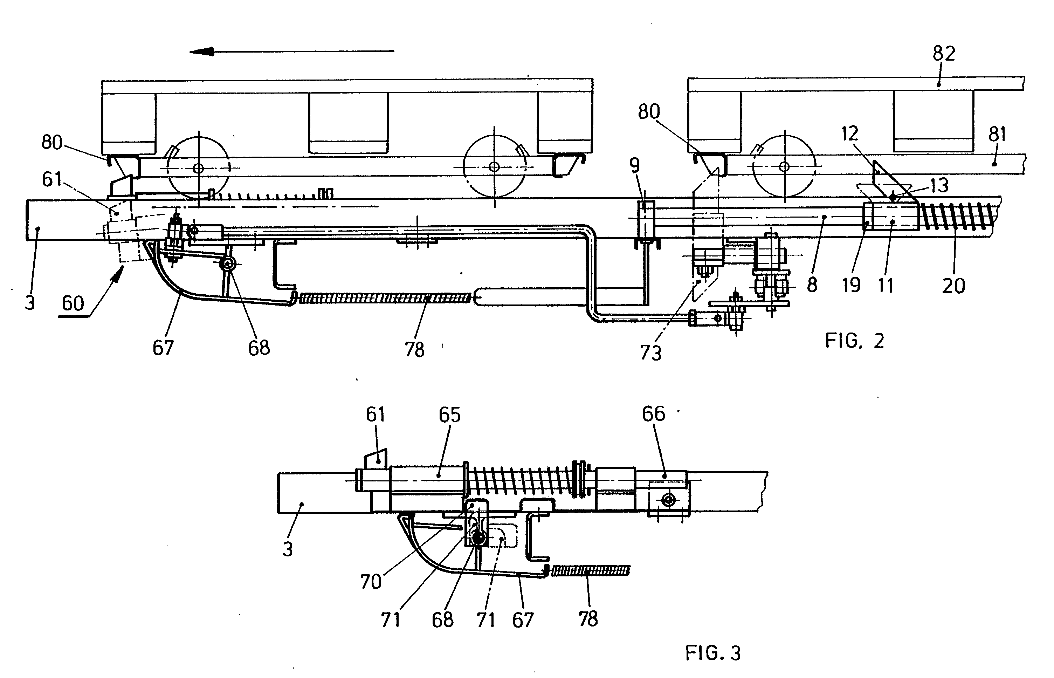

Die Fig. 1 und 2 zeigen das Entladeende einer Palettenvorschub-Anlage 1, welche seitlich durch zwei parallele Geleise 3 begrenzt ist. Diese sind durch Traversen 4 miteinander verbunde . An der vordersten, dargestellten Traverse 4 befindet sich ein Antrieb zum Betätigen der Anlage (nicht dargestellt). Die vollständige Beschreibung einer derartigen Palettenvorschub-Anlage, ohne spezifische Ausbildung des Entladeendes, ist in der EP-A 0 196 592 in den Einzelheiten und bezüglich Funktionsweise erläutert. Daher wird auf diesen Teil hier nicht eingetreten.

Am Ende der verlängerten parallelen Geleise 3 befindet sich ein Endanschlag 60 mit einer nach oben vorstehenden Nase 61. Die auf den äusseren Seiten der Enden der Schienen 3 angebrachten Endanschläge 60 sind in je zwei Lagerböcken 65 geführt, die je an einem Tragarm 64 befestigt sind. Diese Tragarme 64 sind schwenkbar mittels Hülsen auf Lagerzapfen 63 von Laschen 62 gelagert. Die Nasen 61 sind an den vorderen freien Enden von Rundstangen 66 angeordnet. Auf einer Welle 68, die an den beiden Schienen 3 schwenkbar gelagert ist, befindet sich mittig ein Endanschlagbetätiger 67, welcher, wie Fig. 2 zeigt, kufenförmig ausgebildet ist. An den freien Enden der Welle 68 ist je ein Heber 70 mit einem Exzenter 71 vorgesehen, derart, dass beim Zufahren eines Transfergerätes zur Aufnahme der Paletten der Endanschlagbetätiger 67 im Uhrzeigersinn um die Achse der Welle 68 mit dieser gedreht wird. Dabei wird der mit der Welle 68 verbundene Heber 70 ebenfalls im Uhrzeigersinn aus seiner Stehlage in die Liegelage geschwenkt (Fig. 3), wobei der den Tragarm 64 stützt Exzenter 71 aus dieser Stützlage abgesenkt wird. Daher wird unter seinem Eigengewicht der Endanschlag 60, um den Lagerzapfen 63 schwenkend, vorne abkippen, wie dies in strichpunktierter Lage in Fig. 2 ersichtlich ist.

Im hinteren Bereich der Enden de Schienen3 sind, wie Fig. 1 zeigt, zwei Zwischenanschläge 73 vorgesehen, welche um Schwenkachsen 74 quer zur Bewegungsrichtung der Paletten in die und aus der Arbeitslage schwenkbar sind. Zu diesem Zwecke sind auf einem an den beiden Schienen 3 befestigen L-Träger 76 angeordnete Lager 75 vorgesehen. Dabei sind die Schwenkachsen 74 über Gestänge 77, wie die Fig. 1 und 2 zeigen, mit dem Endanschlagbetätiger 67 verbunden, dermassen, dass, wenn dieser im Uhrzeigersinn durch das nach hinten fahrende Transfergerät (nicht dargestellt) verschwenkt wird, das Gestänge 77 über Hebel und Laschen die beiden Zwischenanschläge 73 in die strichpunktiert angegebene Stopplage hochschwenkt. Eine Rückzugfeder 78 zieht den Endanschlagbetätiger 67 in seine Ausgangslage zurück, sobald das Transfergerät diesen freigibt.

An der Vorderfront jedes Rolluntersatzes befindet sich ein Auflaufprofil 80, das an den entsprechenden Anschlägen 60 bzw. 73 zum Anstehen kommt und damit ein weiteres Vorrollen des Rolluntersatzes 81 mit der Palette 82 verhindert.

In den beiden Fig. 1 und 2 ist, entsprechend der erwähnten Palettenvorschub-Anlage, der rohrförmige Vortriebsträger 8 ersichtlich, der als Träger für die Bewegungsknaggen 12 dient. Diese Knaggen auf Knaggenträgern 11 sind um Lager 13 drehbar, wie dies Fig. 2 zeigt. Die Knaggenträger 11 stehen unter dem Druck von Federn 20, welche sie an entsprechende Klemmringe 19 auf dem Träger 8 in ihre vorderste Arbeitslage drücken.

Die Palettenvorschub-Anlage arbeitet an ihrem Entladeende wie folgt:

Bei Beginn ist das Entladeende der Palettenvorschub-Anlage leer. In dieser Lage ist der Endanschlag 60 in seiner oberen Lage, da der Endanschlagbetätiger 67 im Sinne der Fig. 1 und 2 abgeklappt ist, sofern noch kein Transfergerät in das Entladeende eingefahren ist und dabei den Betätiger 67 im Uhrzeigersinn (Fig. 2) geschwenkt hat. Die Zwischenanschläge 73 sind bei dieser Lage des Endanschlagbetätigers 67 in ihrer abgeschwenkten Lage gemäss Fig. 1.

Wenn nun der erste Rolluntersatz 81 mit der Palette 82 durch die Hin- und Herbewegung des Trägers 8 und den daran befestigten Knaggenträgern 11 mit den Knaggen 12 gegen das Entladeende hin verschoben wird, rollt der Rolluntersatz 81 auf den Schienen 3 so weit, bis das Auflaufprofil 80 an der vorstehenden Nase 61 anstösst, wie dies Fig. 2 zeigt.

Je nachdem, wieviele hintereinander angeordnete Rolluntersätze mit Paletten das benützte Transfergerät aufnehmen kann, erfolgt gegentaktweise das Absenken der Nasen 61 einerseits und das Aufstellen der Zwischenanschläge 73 andererseits bzw. das Aufstellen der Nasen 61 und das Absenken der Zwischenanschläge 73. Diese Gegentakt-Bewegungen sind durch die Konstruktion des Endanschlagbetätigers 67 und der Gestänge 77 sichergestellt. Sollen auf dem verwendeten Transfergerät mehr als zwei Rolluntersätze 81 mit Paletten 82 in einer Reihe hintereinander aufgenommen werden, so besteht die Möglichkeit, bei abgesenkten Endanschlägen 60 bzw. Nasen 61 durch eine nicht dargestellte Entkupplung die Nasen 61 von den Zwischenanschlägen 63 abzukuppeln, so dass diese bei gesenkten Endanschlägen 60 ebenfalls in ihre Freigabelage geschwenkt werden können, womit ein Beladen hintereinander liegender Rolluntersätze und Paletten in beliebiger Anzahl möglich wird. Diese Entkupplungsmöglichkeit ist in den Fig. nicht darstellt, jedoch technisch mühelos lösbar und daher rein konstruktiv nicht näher erläutert.

Der Zwischenanschlag 73 kann vorteilhafterweise als sog. Nachlaufsperre ausgebildet werden und nicht, wie dargestellt, als Auflauf für das Auflaufprofil 80 - auch als vordere Traverse bezeichnet. Dieser Anschlag 73 ist dann nach hinten versetzt, so dass er bei Aneinanderliegen des vordersten und des zweiten oder nachfolgenden Rolluntersatzes 81 zwischen die vordere 80 und hintere Traverse des zweiten Rolluntersatzes zu liegen kommt.

Fasst dann aus irgend einem Grund die Schleppeinrichtung des Transfergerätes den vordersten Rolluntersatz nicht, so stösst die nächste Vorschubbewegung des Trägers 8 den zweiten Rolluntersatz 81 und dadurch den ersten, gegen das Transfergerät, wodurch dessen Schleppeinrichtung den ersten Rolluntersatz erfassen kann.

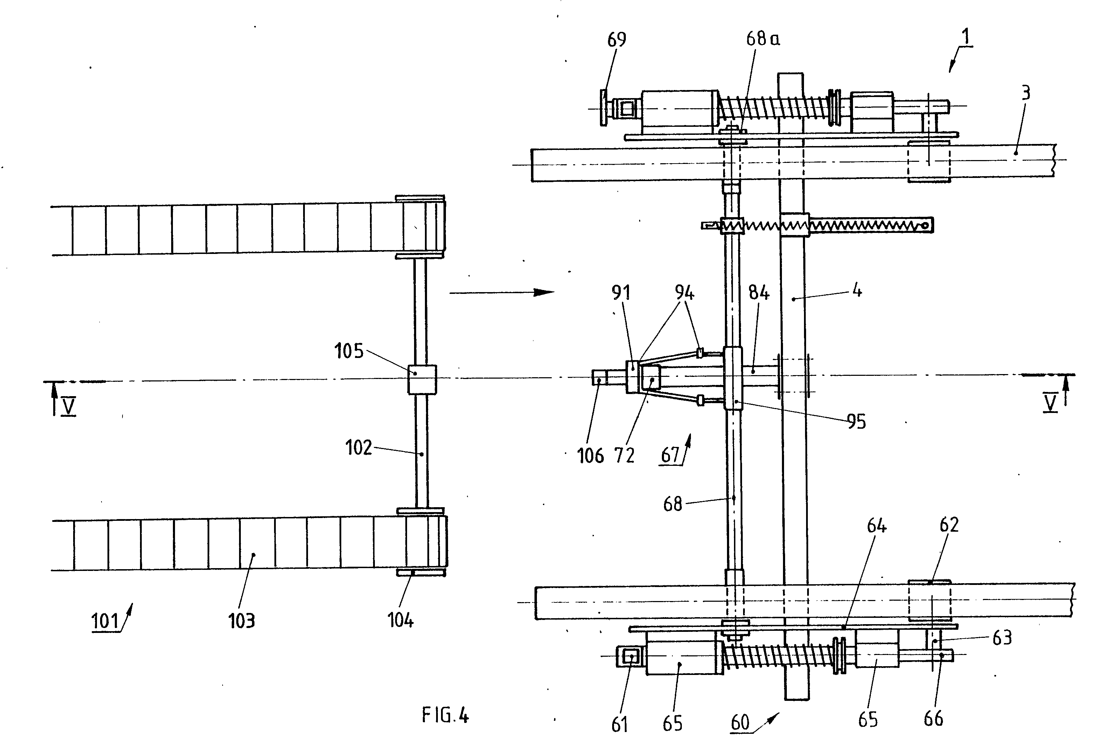

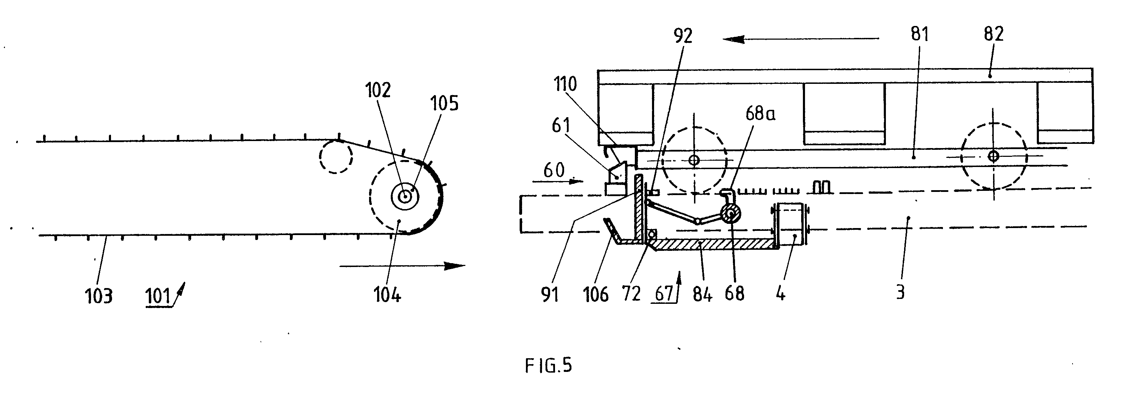

Die Fig. 4 und 5 zeigen das Entladeende einer Palettenvorschub-Anlage 1, welche seitlich durch zwei parallele Geleise 3 begrenzt ist. Diese sind durch Traversen 4 miteinander verbunden. An der vordersten dargestellten Traverse 4 befindet sich ein Antrieb zum Betätigen der Anlage (nicht dargestellt). Die vollständige Beschreibung einer derartigen Palettenvorschub-Anlage, ohne spezifische Ausbildung des Entladeendes, ist in der EP-A 0 196 592 in den Einzelheiten und bezüglich Funktionsweise erläutert. Daher wird auf diesen Teil hier nicht eingetreten.

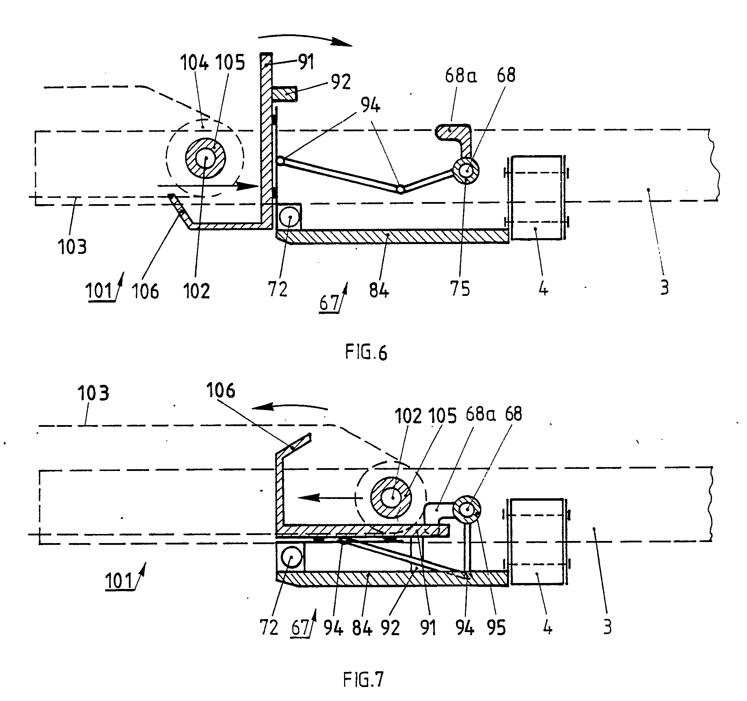

Am Ende der verlängerten parallelen Geleise 3 befindet sich ein Endanschlag 60 mit einer nach oben vorstehenden Nase 61. Die auf den äusseren Seiten der Enden der Schienen 3 angebrachten Endanschläge 60 sind in je zwei Lagerblöcken 65 geführt, die je an einem Tragarm 64 befestigt sind. Diese Tragarme 64 sind schwenkbar mittels Hülsen auf Lagerzapfen 63 von Laschen 62 gelagert. Die Nasen 61 sind an den vorderen freien Enden von Rundstangen 66 angeordnet. Mit einer Welle 68 verbunden, die an den beiden Schienen 3 schwenkbar gelagert ist, befindet sich mittig ein Endanschlagbetätiger 67. An den freien Enden der Welle 68 ist je ein Heber 68a mit einem Exzenter vorgesehen. Der mit der Welle 68 verbundene Heber 68a ist aus einer Stützlage, in welcher der Tragarm 64 durch den Exzenter gestützt wird, (Fig. 6), in eine Liegelage absenkbar ( Fig. 7), wobei der Endanschlag 60 unter seinem Eigengewicht um den Lagerzapfen 63 schwenkend, vorn abkippt, um durch Absenken der Nase 61 einen Rolluntersatz 81 zum Vorrollen freizugeben.

Der Endanschlagbetätiger 67 ist über seinen Träger 84, mit der Traverse 4 fest verbunden. Auf dem Träger 84 ist, über eine Welle 72 montiert, ein kippbarer Anschlag 91 mit einem Kippanschlag 92 vorgesehen, welcher ein Ueberdrehen des Anschlages 91 beim Abkippen verhindert. Der Anschlag 91 ist über zwei Drehlager 94 mit der Welle 68 verbunden, wobei die Verbindung über eine mit der Welle 68 fest verbundene Wellenhülse 95 erfolgt. Vorgelagert zum Anschlag 91 angeordnet, ist ein Rückstellhaken 106. Dieser bewirkt, dass beim Wegfahren des Transfergerätes 101 zwangsläufig die Nase 61 nach oben in ihre Arbeitslage zurückgeschwenkt wird (Fig. 5, 6).

In den Fig. 4 und 5 ist ferner in Transfergerät 101 dargestellt, welches zwe seitliche, von einer Antriebswelle 102 angetriebene Rollbänder 103 umfasst. Der Antrieb erfolgt dabei über Antriebsräder 104. Mittig auf der Antriebswelle 102 ist ein Betätigungsnocken 105 angeordnet, welcher beim Einfahren des Transfergerätes 101 in das Entladeende der Anlage auf den Anschlag 91 des Endanschlagbetätigers 67 aufläuft.

An der Vorderfront jedes Rolluntersatzes befindet sich ein Auflaufprofil 110, das am Anschlag 60 bzw. an der Nase 61 zum Anstehen kommt und damit ein weiteres Vorrollen des Rolluntersatzes 81 mit der Palette 82 verhindert.

Unter Bezugnahme auf die Fig. 6 und 7 wird nun die Arbeitsweise des Endanschlagbetätigers 67 näher beschrieben.

Bei Beginn ist das Entladeende der Palettenvorschub-Anlage leer. In dieser Lage ist der Endanschlag 60 mit der Nase 61 in seiner oberen Lage, da der Anschlag 91 in seiner Ruhelage ist und der Heber 68a den Tragarm 64 stützt (Fig. 6). Der Endanschlagbetätiger 67 ist mithin im Sinne der Fig. 4 - 6 hochgeklappt. Wie aus Fig 6 ersichtlich, liegt also dabei der Exzenter des Hebers 68a oben in seiner Sützlage, in welcher der Tragarm 64 (in Fig. 6 und 7 nicht dargestellt) in seiner obern Lage gestützt wird.

Wenn der Rolluntersatz 81 mit der Palette 82 gegen das Entladeende hin verschoben wird, rollt er auf den Schienen 3 so weit, bis das Auflaufprofil 110 an der vorstehenden Nase 61 anstösst, wie dies in Fig. 5 dargestellt ist.

Das Transfergerät 101 mit den Betätigungsnokken 105 fährt nun gegen das Entladeende der Palettenvorschubanlage 1 und stösst gegen den Anschlag 91 des Endanschlagbetätigers 67 an. Durch das weitere Einfahren des Transfergerätes 101, wie dies in Fig. 6 durch einen Pfeil dargestellt ist, wird der Anschlag 91 im Uhrzeigersinn um die Welle 72 gekippt. Die Kippbewegung des Anschlages 91 erfolgt so weit, bis der Kippanschlag 92 am Träger 84 ansteht. Gleichzeitig mit der Kippbewegung des Anschlages 91 wird die Welle 68 im Gegenuhrzeigersinn gedreht, so dass der Heber 68a mit dem Exzenter aus der Stützlage in eine Liegelage (Fig. 7) geschwenkt wird. Damit wird der Tragarm 64 frei. Er dreht sich im Lager des Zapfens 63 im Gegenuhrzeigersinn, wodurch gleichzeitig das Absenken der Nase 61 erfolgt und der Rolluntersatz 81 zum Weiterrollen freigegeben wird.

Durch das Abkippen des Anschlages 91 kann das Transfergerät 101 weiter in das Entladeende der Anlage 1 einfahren, um so den Rolluntersatz 81 von der Anlage besser fassen und abheben zu können.

Wie aus Fig. 7 ersichtlich, ist der Rückstellhaken 106 mit dem Abkippen des Anschlages 91 gleichzeitig hinter dem Betätigungsnocken 105 hochgeklappt worden. Beim Ausfahren des Transfergerätes 101 aus dem Entladeende der Anlage 1 greift der Betätigungsnocken 105 am Rückstellhaken 106 an und kippt diesen wieder nach unter, wobei der mit dem Rückstellhaken 106 fest verbundene Anschlag 91 nach oben gelangt (Fig. 6). Die mit dem Anschlag 91 verbundene Welle 68 wird durch diese Kippbewegung im Uhrzeigersinn gedreht, so dass der Heber 68a mit dem Exzenter aus der Liegelage wieder in die Stützlage geschwenkt wird. Durch den gleichzeitig nach oben angehobenen Anschlag 60 wird verhindert, dass ein nachfolgender Rolluntersatz 81 über das Entladeende hinausrollen kann.

Der Endanschlagbetätiger 67 kann zudem mit einer Schnappvorrichtung derart ausgerüstet werden, dass er in den beiden in den Fig. 6 und 7 gezeigten Positionen einrasten kann. Dies ist aber nicht unbedingt notwendig, da je nach Ausbildung des Herbers 68a mit dem Exzenter der Endanschlagbetätiger 67 über die Welle 68 in den beiden Positionen gemäss Fig. 6 und 7 festgehalten wird.

Um festzustellen, dass beim Ausfahren des Transfergerätes 101 aus dem Entladeende die Anschläge 60 wieder in die Anschlagslagen hochgeschwenkt worden sind, können verschiedenste Mittel und Vorrichtungen verwendet werden. Beispielsweise ist es möglich, an der Stirnseite des Anschlages 60 einen Reflektor 69 derart zu positionieren, dass vom Transfergerät emittierte Lichtstrahlen nur dann wieder an das Transfergerät zurückreflektiert werden, wenn der Endanschlag 60 in der Anschlagposition ist. Es ist aber auch möglich, einen elektrischen Kontaktgeber derart anzuordnen, dass ein elektrischer Kreis nur dann geschlossen wird, wenn die Endanschläge 60 in der Anschlagposition sind.

Das in den Fig. 4 bis 7 dargestellte Beispiel eines Endanschlagbetätigers 67 stellt nur eine Ausführungsvariante dar, die in x-beliebiger Weise abgeändert werden kann. Wesentlich dabei ist, dass der Endanschlagbetätiger beim Einfahren eines Transfergerätes derart weggeschwenkt oder abgedreht wird, dass das Transfergerät durch den Betätiger am Einfahren in das Entladeende nicht gehindert wird.

Auf diese Weise ist es möglich, die Anlage mittels des Transfergerätes zum Entladen der Rolluntersätze mit Paletten zu steuern und diese im wesentlichen gradlinig fortzubewegen, ohne dass die schweren Rolluntersätze mit den Paletten angehoben werden müssen. Damit wird auch sichergestellt, dass keine Verrutschungen von Ladegütern auf den Paletten vorkommen und ein Anheben grosser Lasten vermieden wird. Dies wirkt sich im besondern nicht nur beim Entladen des Kanals aus, sondern auch beim Einschieben der beladenen Rolluntersätze in den Kanal. Ferner tritt ein kleinerer Verschleiss ein und das Laden der Paletten aus der Palettenvorschub-Anlage auf die Transfergeräte kann schnell, einfach und sicher erfolgen.

Diese Konstruktion gemäss den Fig. 4 bis 7 ermöglicht es ferner, dass nach Absenken der Nase 61, bedingt durch die Ausführung im Sinn des Anschlages 91, das Transfergerät 101 sich noch um einen Betrag z.B. ± 10 cm, bewegen kann. Dies gibt die Möglichkeit auch einen Rolluntersatz 81 mittels des Rollbandes 103 zu erfassen, welcher nicht is zur Nase 61 gerollt, sondern vor dieser stehen geblieben ist. Damit wird das Einsetzen des Vortriebsträgers 8 zwecks Verschieben dieses Rolluntersatzes 81 auf die Höhe der Nase 61 vermieden.

Alle in der Beschreibung und/oder den Figuren dargestellten Einzelteile und Einzelmerkmale sowie deren Permutationen, Kombinationen und Variationen sind erfinderisch, und zwar für n Einzelteile und Einzelmerkmale mit den Werten n = 1 bis n → ∞.

## Ansprüche

1. Palettenvorschub-Anlage, insbesondere mit zwei Schienen (3) zur Aufnahme von Rolluntersätzen (81), die mit Paletten (82) beladbar sind sowie mit schiebebeweglichen Vorschubknaggen (12) und einem diese Knaggen (12) antreibbaren Antrieb (8, 11), vorzugsweise nach mindestens einem der Ansprüche, dadurch gekennzeichnet, dass das Entladeende der Anlage mindestens einen Endanschlag (60) aufweist, welcher in eine Freigabelage bewegbar ist.

2. Palettenvorschub-Anlage, vorzugsweise nach mindestens einem der Ansprüche, dadurch gekennzeichnet, dass ein Endanschlagbetätiger (67) angeordnet ist, welcher vom Entladeende her nach dem andern Ende der Anlage hin zum Freigeben des Endanschlages (60) betätigbar ist.

3. Palettenvorschub-Anlage, vorzugsweise nach mindestens einem der Ansprüche, gekennzeichnet durch mindestens einen Zwischenanschlag (73), welcher mit dem Endanschlag (60) wirkverbunden ist, z. B. mittels eines Betätigers (67) und gegebenenfalls über ein Gestänge.

4. Palettenvorschub-Anlage, vorzugsweise nach mindestens einem der Ansprüche, dadurch gekennzeichnet, dass Mittel vorgesehen sind, um die Wirkverbindung zu lösen und um den Zwischenanschlag selbsttätig zu bewegen.

5. Palettenvorschub-Anlage, vorzugsweise nach mindestens einem der Ansprüche, dadurch gekennzeichnet, dass der Endanschlag (60) als, z.B. in Geleiserichtung federnder, insbesondere unter seinem Eigengewicht abschwenkbarer Balken ausgebildet ist, um z.B. eine Anschlagnase (61) in die Freigabelage zu bewegen.

6. Palettenvorschub-Anlage, insbesondere mit zwei Schienen (3), zur Aufnahme von Rolluntersätzen (21), die mit Paletten (82) beladbar sind, sowie mit mindestens einem Endanschlag (60) an einem Entladeende der Anlage, der durch mindestens einen Endanschlagbetätiger (67) in und aus einer Freigabelage für die Rolluntersätze betätigbar ist, dadurch gekennzeichnet, dass der Endanschlagbetätiger (67) von einer Palettentransfervorrichtung (21) zur Aufnahme der Paletten derart betätigbar angeordnet ist, dass er mindestens teilweise aus dem Bewegungsweg der Transfervorrichtung (21) wegschwenkbar ist und damit die Transfervorrichtung zur Aufnahme der Paletten den Endanschlagbetätiger (67) mindestens teilweise passieren kann, um in das Entladeende der Anlage einzufahren.

7. Palettenvorschub-Anlage, vorzugsweise nach mindestens einem der Ansprüche, dadurch gekennzeichnet, dass der Endanschlagbetätiger (67) um eine Achse (72) weitgehendst in und gegen die Vorschubrichtung der Paletten kippbar angeordnet ist.

8. Palettenvorschub-Anlage, vorzugsweise nach mindestens einem der Ansprüche, dadurch gekennzeichnet, dass der Endanschlagbetätiger (67) einen kippbaren Anschlag (71) umfasst, an welche die Transfervor richtung (21) beim Einfahren in das Anlageende anstösst und diesen derart im wesentlichen in Einfahrrichtung umkippt, dass der Anschag den Bewegungsweg der Transfervorrichtung freigibt und diese den Endanschlagbetätiger (67) passieren kann, um in das Entladeende der Anlage einzufahren.

9. Palettenvorschub-Anlage, vorzugsweise nach mindestens einem der Ansprüche, dadurch gekennzeichnet, dass der Betätiger (67) eine Rückstellvorrichtung (76) umfasst, durch welche der Endanschlagbetätiger (67) beim Ausfahren der Transfervorrichtung (21) aus dem Entladeende den Betätiger (67) in eine Ausgangslage zurückkippt und damit den Endanschlag (60) aus der Freigabelage in eine Anschlaglage bewegt.

10. Palettenvorschub-Anlage, vorzugsweise nach mindestens einem der Ansprüche, dadurch gekennzeichnet, dass weiter Mittel (69) vorgesehen sind, die anzeigen, ob der Endanschlag (60) in einer Anschlaglage oder einer Freigabelage ist.

11. Palettenvorschub-Anlage, vorzugsweise nach mindestens einem der Ansprüche, dadurch gekennzeichnet, dass diese Mittel mindestens eine Reflektor (69) am Endanschlag (60) umfassen, auf welchem von der Transfervorrichtung (21) emittierte Strahlen derart auftreffen, dass sie entweder in der Anschlaglage oder in der Freigabelage des Endanschlages (60) an eine an der Transfervorrichtung (21) positionierte Zelle reflektiert werden.

12. Palettenvorschub-Anlage, vorzugsweise nach mindestens einem der Ansprüche, dadurch gekennzeichnet, dass die Mittel (69) einen Impulsgeber umfassen.

FIG. 1

FIG. 2

FIG. 3

FIG.4

EP 0 319 880 A1

FIG.5

EP 0 319 880 A1

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | US-A-3 658 173  (J.A. CONTI)<br>* Insgesamt, insbesondere Figur 2;<br>Punkte 53; Spalte 2, Zeilen 48-56 * | 1,2 | B 65 G  25/10<br>B 65 G   1/08 |
| Y |  | 3,5 | |
| | --- | | |
| D,Y | US-A-4 212 584  (D.O. JOHNSON)<br>* Insgesamt * | 3,5 | |
| A |  | 4 | |
| | --- | | |
| X | DE-A-3 006 143  (MILCHHOF)<br>* Insgesamt * | 6-9 | |
| Y |  | 10-12 | |
| | --- | | |
| Y | US-A-4 600 120  (M.K. SABO)<br>* Figur 2; Spalte 4, Zeilen 40-49 * | 10-12 | |
| D,A | EP-A-0 196 582  (J. RADLMAIR)<br>* Insgesamt *<br>----- | 1-3 | RECHERCHIERTE SACHGEBIETE (Int. Cl.4)<br><br>B 65 G |

Der vorliegende Recherchenbericht wurde für alle Patentansprüche erstellt

| Recherchenort | Abschlußdatum der Recherche | Prüfer |
|---|---|---|
| DEN HAAG | 07-03-1989 | WERNER D.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
    Dokument

EPO FORM 1503 03.82 (P0403)